# EUROPEAN PATENT SPECIFICATION

(11) **EP 1 082 537 B1**
(45) Date of publication and mention of the grant of the patent: **02.11.2005**
(21) Application number: 99930119.5
(22) Date of filing: 26.05.1999
(51) Int. Cl.: F02M 51/06, F02M 21/02

(54) **CONTAMINANT TOLERANT COMPRESSED NATURAL GAS INJECTOR AND METHOD OF DIRECTING GASEOUS FUEL THERETHROUGH**
VERUNREINIGUNGSTOLERANTES EINSPRITZVENTIL FÜR VERDICHTETES ERDGAS UND VERFAHREN ZUR FÜHRUNG VON GASFÖRMIGEM BRENNSTOFF DURCH EIN SOLCHES EINSPRITZVENTIL
INJECTEUR POUR GAZ NATUREL COMPRIME TOLERANT AUX CONTAMINANTS ET ORGANISATION DE LA TRAVERSEE DE L'INJECTEUR PAR LE CARBURANT GAZEUX

(30) Priority: 27.05.1998 US 86937 P; 26.05.1999 US 320178
(43) Date of publication of application: 14.03.2001
(73) Proprietor: Siemens VDO Automotive Corporation, Auburn Hills, Michigan 48326-2980 (US)
(72) Inventor: FOCHTMAN, James, Paul, Williamsburg, VA 23185 (US); WRIGHT, Danny, Orien, Cobb's Creek, VA 23035 (US); COHEN, James, H., Virginia Beach, VA 23454 (US)
(74) Representative: Humphrey-Evans, Edward John
(86) International application number: PCT/US1999/011605
(87) International publication number: WO 1999/061780

(56) References cited:
- US-A- 4 662 567
- US-A- 5 035 360
- US-A- 5 127 585
- US-A- 5 494 224
- US-A- 5 609 304

## Description

### CROSS-REFERENCE TO RELATED APPLICATION

This application expressly claims the benefit of earlier filing date and right of priority from the following co-pending patent applications: U.S. Provisional Application U.S. Serial No. 60/086,937, entitled "Contaminant Tolerant Compressed Natural Gas Injector" filed 27 May 1998: and U.S. Provisional Application U.S. Serial No. 60/086,939, entitled "Needle Valve For Low Noise Fuel Injector" filed 27 May 1998.

### BACKGROUND OF THE INVENTION

### 1. FIELD OF THE INVENTION

The present application relates to a compressed natural gas injector, which is tolerant of contamination in the gas.

### 2. DESCRIPTION OF THE RELATED ART

Compressed natural gas (hereinafter sometimes referred to as "CNG") is becoming a common automotive fuel for commercial fleet vehicles and residential customers. In vehicles, the CNG is delivered to the engine.in precise amounts through gas injectors, hereinafter referred to as "CNG injectors". The CNG injector is required to deliver a precise amount of fuel per injection pulse and maintain this accuracy over the life of the injector. In order to maintain this level of performance for a CNG injector, certain strategies are required to help reduce the effects of contaminants in the fuel.

Compressed natural gas is delivered throughout the country in a pipeline system and is mainly used for commercial and residential heating. While the heating systems can tolerate varying levels of quality and contaminants in the CNG. the tolerance levels in automotive gas injectors are significantly lower.

These contaminants, which have been acceptable for many years in CNG used for heating, affect the performance of the injectors to varying levels and will need to be considered in future CNG injector designs. Some of the contaminants found in CNG are small solid particles, water, and compressor oil. Each of these contaminants needs to be addressed in the injector design for the performance to be maintained over the life of the injector.

The contaminants can enter the pipeline from several sources. Repair, maintenance and new construction to the pipeline system can introduce many foreign particles into the fuel. Water, dust, humidity and dirt can be introduced in small quantities with ease during any of these operations. Oxides of many of the metal types found in the pipeline can also be introduced into the system. In addition, faulty compressors can introduce vaporized compressor oils, which blow by the seals of the compressor and enter into the gas. Even refueling can force contaminants on either of the refueling fittings into the storage cylinder. Many of these contaminants are likely to reach vital fuel system components and alter the performance characteristics over the life of the vehicle.

In general, fuel injectors require extremely tight tolerances on many of the internal components to accurately meter the fuel. For CNG injectors to remain contaminant tolerant, the guide and impact surfaces for the armature needle assembly require certain specifically unique characteristics. We have invented a CNG fuel injector which represents a significant improvement over presently known injectors while being tolerant to contaminants commonly found in compressed natural gas. We have also invented a method of directing compressed natural gaseous fuel through such injectors in a manner to promote efficient and effective firing without misfire.

### SUMMARY OF INVENTION

The invention relates to an electromagnetically operable fuel injector for a gaseous fuel injection system of an internal combustion engine, the injector having a generally longitudinal axis, which comprises a ferromagnetic core, a magnetic coil at least partially surrounding the ferromagnetic core, an armature magnetically coupled to the magnetic coil and being moveably responsive to the magnetic coil, the armature actuating a valve closing element which interacts with a fixed valve seat of a fuel valve and being moveable away from the fixed valve seat when the magnetic coil is excited. The armature has a generally elongated shape and a generally central opening for axial reception and passage of gaseous fuel from a fuel inlet connector positioned adjacent thereto. The fuel inlet connector and the armature being adapted to permit a first flow path of gaseous fuel between the armature and the magnetic coil and a valve body shell as part of a path leading to the fuel valve. At least one first fuel flow aperture extends through a wall portion of the armature to define a second flow path of gaseous fuel as part of a path leading to the fuel valve.

In accordance with the present invention, there is provided an electromagnetically operable fuel injector for a fuel injector system of an internal combustion engine, said injector being generally tubular, having a generally longitudinal axis and comprising: a ferromagnetic core; a magnetic coil surrounding at least part of the ferromagnetic core; an armature magnetically coupled to said magnetic coil and being moveably responsive to said magnetic coil, said armature actuating a valve closing element which interacts with a fixed valve seat of a fuel valve and being moveable away from said fixed valve seat when said magnetic coil is excited, said armature having a generally elongated shape and a generally central opening for axial reception and passage of gaseous fuel from a fuel inlet connector positioned adjacent thereto, said fuel inlet connector and said armature being adapted to permit a first flow path of gaseous fuel across a working gap, transverse to said axis, between faxing surfaces of said armature and said fuel inlet connector as part of a path leading to said fuel valve; and at least one first fuel flow aperture extending through a wall portion of said armature to define a second flow path of gaseous fuel as part of a path leading to said fuel valve; and said fuel injector being characterised in that it is operable for gaseous fuel and by the provision in said working gap of means defining on said facing surface of said fuel inlet connector a plurality of slots directed radially of said axis and collectively comprising said first flow path for the gaseous fuel.

Conveniently a lower end portion of the fuel inlet connector, which has a lower surface which faces an upper surface of the armature, is provided with a plurality of radially extending raised pads defined thereon, the pads having recessed portions therebetween to permit fuel to flow therethrough and across the working gap defined between the fuel inlet connector and the armature.

The armature defines at least one first and at least one second fuel flow aperture extending through wall portions thereof, the at least one first and at least one second aperture oriented at an acute angle with the longitudinal axis, and positioned for directing fuel therethrough toward the fixed valve seat. The lowermost surface of the fuel inlet connector and the armature are adapted to permit gaseous fuel to flow across the working gap and between the armature and the magnetic coil whereby at least three fuel flow paths are permitted. Preferably lowermost end portion of the fuel inlet connector has a generally chamfered configuration along the lowermost outer surface thereof. The generally chamfered portion of the fuel inlet connector preferably has a generally arcuate cross-section.

The valve-closing element is a valve needle adapted for selective engagement and disengagement with the fixed valve seat and is attached to the armature by crimped portions of the armature. A fuel filter is positioned at an upper end portion of the fuel inlet connector for filtering fuel prior to reception by the fuel inlet connector. The fuel inlet connector includes a lower surface portion having a plurality of radially extending grooves defining a corresponding plurality of radially extending raised pads so as to reduce the effective surface area of the lower surface portion of the fuel inlet connector facing the armature to thereby permit the gaseous fuel to flow generally transversely in the working gap, the transverse fuel flow thereby preventing accumulation of contaminants in the working gap. The generally radially extending pads preferably have a generally trapezoidal shape, but may be of various shapes, depending upon the circumstances or results desired. Further, the fuel injector is applicable to liquid fuel systems such as gasoline, as well as with the preferred CNG systems.

The valve closing element is a generally elongated valve needle having a spherically shaped end portion and configured and adapted to engage a frust-conically shaped fixed valve seat to close the valve, and movable therefrom to open the valve to permit fuel to pass therethrough toward the intake manifold of the internal combination engine. The valve needle is connected to the lower end portion of the armature by crimped portions. The resilient device to move the armature to close the valve is a coil spring in engagement at one end with the fuel inlet connector and at the other end with the armature to bias the armature downwardly toward the valve seat. The armature includes at least two of the first apertures extending through wall portions thereof and generally transverse to the longitudinal axis for receiving fuel from the generally axial elongated central opening. The armature may alternatively define a plurality of the first apertures for receiving fuel from said generally axial elongated central opening. The armature may also define a plurality of the second apertures, at least certain of the second apertures extending at a generally acute angle to the longitudinal axis to receive fuel from the generally central opening.

A method is disclosed for directing gaseous fuel through an electromagnetically operable fuel injector for a fuel system of an internal combustion engine, the injector having a generally longitudinal axis, and including a fuel inlet end portion and a fuel outlet end portion, a fuel inlet connector positioned at the fuel inlet end portion and having a fuel inlet end portion and a fuel outlet end portion, an armature positioned adjacent the fuel outlet end portion of the fuel inlet connector and having a generally central elongated opening for reception of fuel from said fuel inlet connector, the armature being spaced from the fuel inlet connector to define a working gap to permit movement of the armature toward and away from the fuel inlet connector to selectively open and close a fuel valve to permit gaseous fuel to pass therethrough to an air intake manifold. The method comprises, directing the gaseous fuel to pass axially through the fuel inlet connector, directing the gaseous fuel to pass from the fuel inlet connector to the generally elongated central opening of the armature in an axial direction toward the fuel valve, directing at least a portion of the fuel flow from the fuel inlet connector to the armature to flow generally transversely across the working gap, and diverting at least a portion of the flow of gaseous fuel passing through the armature to flow in a direction away from the axial direction. The step of directing the gaseous fuel passing through the armature to flow in a direction away from the axial direction is preferably accomplished by directing the gaseous fuel through at least one first aperture provided in a wall portion of the armature. Preferably the at least one first aperture in the wall portion of the armature extends generally transverse to the axial direction. A lower end portion of the fuel inlet connector faces an upper end portion of the armature and provides at least one second aperture comprising a working gap defined by a plurality of radial slots between a lower surface of the fuel inlet connector and an upper surface of the armature and is configured to permit the gaseous fuel to flow from the fuel inlet connector to be directed transversely across the working gap. The radial slots are formed in the lower surface of the fuel inlet connector. Conveniently, at least a portion of the gaseous fuel flowing in the armature is permitted to pass through at least one second aperture delivered by a plurality of slots between a lower surface of the fuel inlet connector and an upper surface of the armature, the at least one second aperture extending at an acute angle to the longitudinal axis, whereby at least three separate fuel flow paths are established. The injector preferably comprises a magnetic coil system and said armature is magnetically coupled to the magnetic coil system to cause the armature to move toward and away from the fuel inlet connector. At least one of the fuel flow paths is located between the armature and the magnetic coil of the magnetic coil system, as well as between the armature and a valve body shell at least partially surrounding the armature. The at least one first and second apertures in the armature are preferably from about 1 to about 2.0mm in diameter. Further, predetermined numbers of the first and second apertures are provided and the diameters thereof are predetermined to establish a predetermined number of fuel flow paths and volumetric flow rates thereof.

### REFERENCE TO SPECIFIC PRIOR ART

Injectors of the general form described hereinbefore, comprising a tubularly configured device with generally axial fuel flow characteristics and a spring-loaded, electromagnetically actuatable valve are well known, for example from United States Patents Nos. 4,662,567 and 5,609,304.

In both of these patents, there is a disclosure of a gasoline fuel injector in which a working space of short axial extent is provided between facing surfaces of an armature and a fuel inlet connector or similar component, but neither patent identifies or addresses problems associated with, for example, tolerance of fuel contaminants in the working space when gaseous fuels are used. Thus neither patent addresses such problems, and neither, therefore, contributes towards their solution. This invention, on the other hand, provides solutions to such problems, by means of features of the foregoing kind and, in particular, by channelling the flow of gaseous fuel across the working space, in a direction generally lateral of the injector's axis, though radially directed slots.

### BRIEF DESCRIPTION OF THE DRAWINGS

Preferred embodiments of the invention are described hereinbelow with reference to the drawings wherein:
Fig. 1 is an elevational view, partially in cross-section, of a preferred embodiment of a compressed natural gas injector constructed according to the invention;
Fig. 2 is an enlarged elevational cross-sectional view of the lower portion of the injector of Fig. 1, showing the improved armature and needle which forms part of the invention;
Fig. 3 is a partial elevational cross-sectional view of the lower end portion of the fuel inlet connector of the injector shown in Fig. 1:
Fig. 4 is a plan view of the bottom surface of the preferred fuel inlet connector shown in Fig. 1;
Fig. 5 is an elevational cross-sectional view of a preferred embodiment of the armature shown in Fig. 1 and illustrating the improved fuel flow paths resulting therefrom:
Fig. 6 is an elevational cross-sectional view of the upper portion of a preferred embodiment of the valve body shown in Fig. 1;
Fig. 7 is a partial elevational cross-sectional view of the lower end portion of an alternative embodiment of the fuel inlet connector shown in Fig. 3:
Fig. 8 is a plan view of the bottom surface of the fuel inlet connector shown in Fig. 7;
Fig. 9 is an elevational cross-sectional view of an alternative embodiment of the armature shown in Fig. 5:
Fig. 10 is an elevational cross-sectional view of the upper portion of an alternative embodiment of the valve body shown in Fig. 6:
Fig. 11 is an enlarged elevational view of the armature shown in Fig. 5 and a cross-sectional view of the valve body shown in Fig. 6. incorporating an improved valve needle a fuel columnating jet flow device;
Fig. 12 is an enlarged elevational view, partially in cross-section, of the armature shown in Fig. 5, and the improved valve needle shown in Fig. 11;
Fig. 13 is an enlarged cross-sectional view illustrating the sealing tip portion of the valve needle as seated on the fixed valve seat as shown in Figs. 1 and 11. illustrating the preferred dimensional relationship between the needle tip, the fixed valve seat and the lower needle guide; and
Fig. 14 is a view taken along lines 14-14 of Fig. 11, illustrating a preferred valve needle lower guide having arcuately shaped fuel passage openings.

### DESCRIPTION OF THE PREFERRED EMBODIMENTS

Referring initially to Fig. I there is shown a CNG injector 10 which is constructed according to the present invention. Injectors of the type contemplated herein are described in commonly assigned U.S. patent No. 5,494,224, the disclosure of which is incorporated by reference herein.

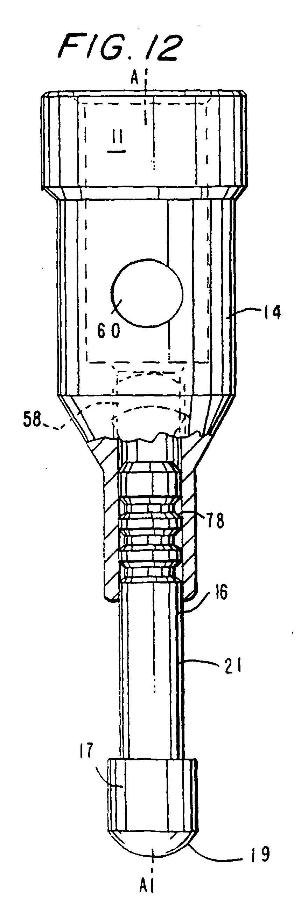

The injector 10 includes housing 12 containing armature 14 to which valve needle 16 is attached by crimping as will be described later in conjunction with Fig. 12. Fuel inlet connector 18 includes central fuel flow opening 13 and CNG filter 20 at the upper end portion of opening 19 as shown The fuel inlet connector 18 also includes adjusting tube 22 connected thereto at 24 by a known crimping procedure. Housing 12 includes inner non-magnetic shell 26 which surrounds the inlet connector 18 and armature 14 having central fuel flow opening 11 as shown. Armature 14 and inlet connector 18 define with housing 12. an enclosure for coil 28 which is selectively energized to move armature 14 and needle 16 upwardly to open the valve aperture 41, and selectively deenergized to permit armature 14 and needle 16 to return to the "closed valve" position as shown, under the force of coil spring 30. Fuel flow into the injector begins at filter 20 and passes through fuel inlet connector 18. to armature 14. and ultimately to valve aperture 41 of valve seat 40 into the intake manifold of the engine (not shown).

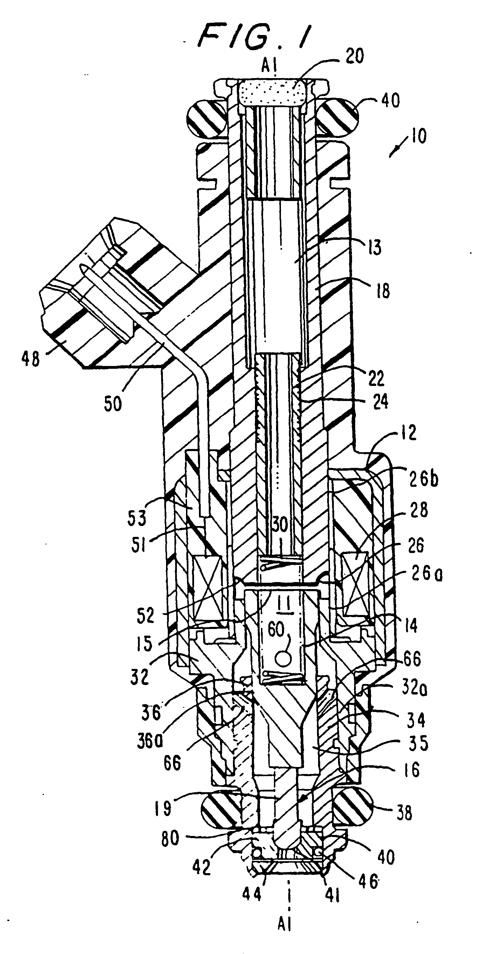

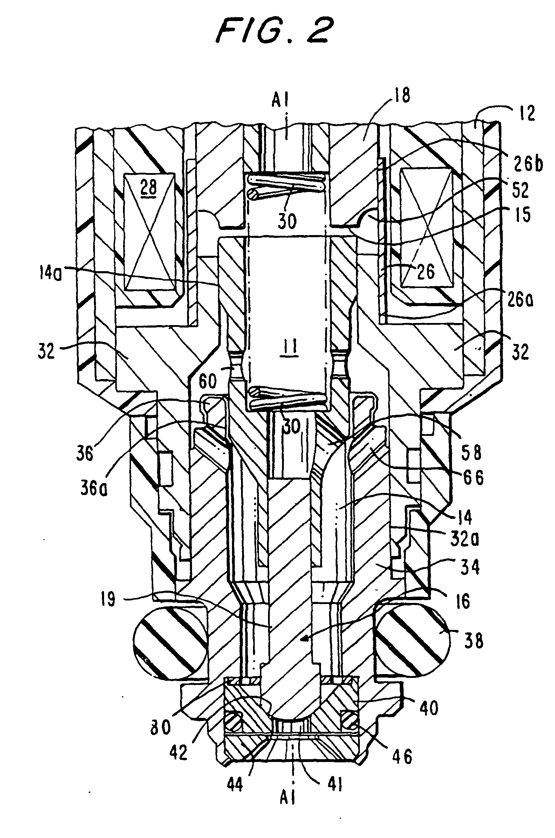

Referring further to Fig. 1 in conjunction with Fig. 2, valve body shell 32, which is made of a ferromagnetic material and which forms part of a magnetic circuit, surrounds valve body 34 and has at the upper end, upper guide 36 as shown. Space 36a between upper guide 36 and armature 14 is about .010 to about .015mm on the diameter, and permits guiding movement of armature 14. Lower O-rings 38 provide sealing between the injector 10 and the engine intake manifold (not shown) and upper O-rings 40 provide sealing between the injector 10 and the fuel rail (also not shown). Valve body 34 defines central fuel flow opening 35.

In Fig. 2. valve body shell 32 is attached to valve body 34. preferably by weld 32a, and at the upper end by weld 26a. to non-magnetic shell 26. Non-magnetic shell 26 is in turn welded to fuel inlet connector at 26b. Thus, fuel flowing from fuel inlet connector 18 across working gap 15 must flow through the clearance space 14a between armature 14 and valve body shell 32 which is also provided to permit upward and downward movement of armature 14. The space 14a is approximately 0.10 to 0.30mm on the diameter.

Referring again to Figs. 1 and 2, valve seat 40 contains a valve orifice 41 and a funnel shaped needle rest 42 having a frusto-conical cross-sectional shape. The valve seat 40 is maintained in position by back-up washer 44 and sealed against fuel leakage with valve body 34 by O-ring 46. Overmold 48 of suitable plastic material such as nylon supports terminal 50 which extends into coil 28 and is connected via connection 51 to provide selective energization of the coil to open the valve by raising the armature 14 and valve needle 16 against the force of spring 30. Coil 28 is surrounded by dielectric plastic material 53 as shown in the Figs.

In injectors of this type, the interface space 15 (or working gap 15) between the inlet connector and the armature is extremely small, i.e. in the order of about 0.3mm (millimeters), and functions relatively satisfactorily with conventional fuels which are relatively free of contaminants such as water, solids, oil, or the like, particularly after passing through a suitable fuel filter. Accordingly, when the two surfaces surrounding space 15 are in such intimate contact that the atmosphere between them is actually displaced in relatively significant amounts, atmospheric pressures acting on the two members actually force the two surfaces together. Any liquid contaminant present at the armature/inlet connector interface would allow for the atmosphere to be displaced, thereby adversely affecting the full and free operation of the armature/needle combination.

When known injectors, which functioned at relatively acceptable levels with relatively clean conventional fuels, were utilized with CNG. impurities such as oil or water at the inlet connector/armature interface produced a force of about 16.5 Newtons holding the armature to the inlet connector. In comparison, the force provided by spring 30 is in the order of about 3 Newtons, thus fully explaining the erratic closing of the armature/valve needle when the fuel utilized with known injectors is CNG. In particular, the 16.5 Newton force holding the inlet connector and armature together is due to the fact that the fuel operating pressure within the injector is about 8 bar (i.e. 8 atmospheres) and this force of about 16.5 Newtons acts across the lower surface area of the inlet connector 18, which is about 21 square millimeters (i.e. mm²). Thus a relatively minor slick of oil or other impurity within space 15 of a known injector will cause the inlet connector and the annature to become temporarily attached to each other, particularly due to the 8 bar pressure acting on the remaining surfaces of the inlet connector and armature. As noted, the tendency for the armature to become attached to the inlet connector results in erratic valve closing.

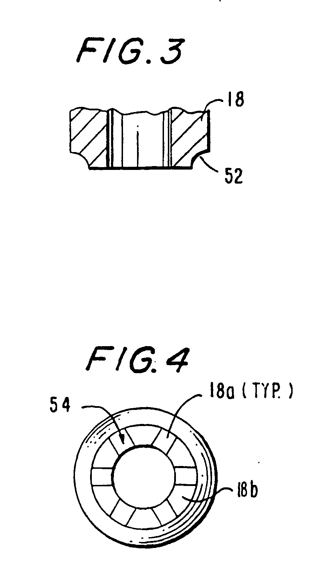

Significant features of the present invention are provided inter alia, to eliminate the aforementioned erratic valve closing and improve the operation of the injector. In Fig. 3. the lower end portion of inlet connector 18 is configured as shown by the arcuately chamfered end 52. This configuration provides a beneficial effect in that it directs and orients the magnetic field across the working gap 15 in a manner which optimizes the useful magnetic force created for moving the armature through the working gap. This feature is disclosed in commonly assigned, commonly filed (Attorney Docket No. 99P7609US application entitled "Compressed Natural Gas Fuel Injector Having Magnetic Pole Face Flux Director." the disclosure of which is incorporated herein by reference. Additional features are disclosed in commonly assigned, commonly filed (Attorney Docket No. 99P7610US) copending application entitled "Compressed Natural Gas Injector having Gaseous Dampening for Armature Needle Assembly during Opening," the disclosure of which is incorporated herein by reference.

In addition, as shown in Fig. 4, radial slots in the form of recessed surfaces 18a are provided in the lowermost surface of inlet connector 18 to reduce the effective contact surface area between the armature and the inlet connector by about one third of the total cross-sectional area which was utilized in prior art conventional injectors. This configuration provides six coined pads 18b of about 0.05mm in height, thus creating six corresponding rectangular shaped radial slots 18a to provide fuel flow paths. By reducing, the effective surface area of the lowermost face of the inlet connector 18 as shown, the tendency to develop an attractive force between the inlet connector 18 and the armature 14 is significantly reduced to about one-third of its original value, and the ability to tolerate fuel contaminants at the interface without producing an attractive force therebetween is also significantly increased. As noted, preferably, the rectangular radial slots 18a are of a shallow depth. i.e. about 0.05mm. (i.e., millimeters) in order to provide the benefit of reducing the inlet connector/armature interface surface area while still providing a relatively unobtrusive location for collection of solid contaminants which are ultimately removed by the flow of gaseous CNG.

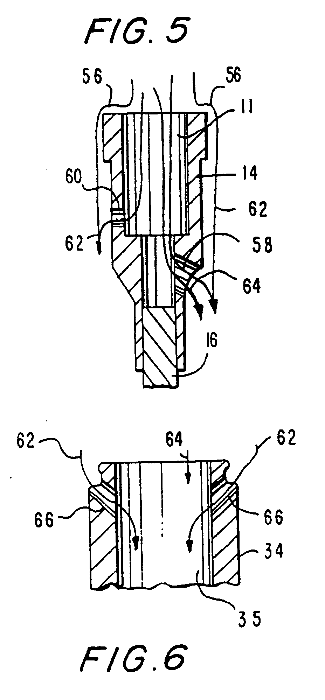

As noted, the provision of recessed surfaces 14a in the lowermost surface of inlet connector 18 creates raised pads 18b on the surface, which pads improve the tolerance of the injector to fuel contaminants in several ways. The recessed surfaces 18a may be made by any suitable process, but are preferably coined. The first effect is to reduce the contact area of the inlet connector at the armature interface, thereby significantly reducing any attractive force generated therebetween by liquid contaminants such as oil or water. Furthermore, as noted, the radial pads 18b provide hidden areas between the pads where contaminants can collect without affecting the operative working gap 15 until being drawn away by the fuel flow. The working gap for gasoline is about 0.08mm to about 0.14mm, and about 0.3mm for compressed natural gas. In addition, as noted, the provision of the six rectangular recessed portions in the form of slots 18a and six raised pads 18b, each having a generally trapezoidal shape, on the inlet connector, provide a unique fuel flow path past the inlet connector/armature interface in a manner which causes the gaseous fuel to pass transversely through the working gap 15 as shown at 56 in Fig. 5 and allow for the control of the fuel flow around and through the armature by controlling the pressure losses.

Also, by controlling the sizes of the recessed surfaces 18a and raised pads 18b, and the various apertures 58. 60. 66 in the armature and the valve body as will be described - as well as the numbers and combinations of such openings - the fuel flow can be controlled over at least three flow paths and pressure losses can also be controlled. For example, a small pressure differential across the armature while fully open, assists spring 30 during breakaway upon closing and provides dampening on opening impact. The additional fuel flow path also reduces the possibility of contaminants collecting above upper guide 36 as shown in Fig. 2. In summary, numerous combinations of apertures and sizes thereof - as well as slots and pads on the fuel inlet connector - can be made to direct the gaseous fuel flow in any desired manner which is best for optimum fuel burning and engine application.

Referring now to Figs. 5 and 6 in conjunction with Figs. 1-3. there is illustrated still another significant improvement, which renders the fuel injector assembly more fully capable of operation with CNG. In prior art injectors which were used with relatively contaminant free fuels the fuel would pass through the filter down through the inlet connector into the armature and out an opening positioned relatively close to the lowest portion of the armature which was located substantially immediately above the valve aperture. In the present structure there is provided a relatively diagonally oriented aperture 58 shown in Fig. 5. which directs the CNG flow therethrough and downwardly toward valve aperture 41 for entry into the intake manifold of the internal combustion engine.

As shown in Fig. 5, aperture 58 forms a generally acute angle with longitudinal axis A-A of the fuel injector 10. In addition, the armature of the present invention provides at least one side opening 60 which is generally transverse to the longitudinal axis A-A. to permit fuel flowing downwardly through the center of the armature to be directed sidewardly out of the armature and thereafter downwardly toward the valve aperture 41 shown in Fig. 1. In the embodiment shown in Fig. 1. aperture 60 is generally horizontal, but may be oriented at an acute angle to the longitudinal axis if desired. Aperture 58 is not shown in the cross-sectional view of Fig. 1. The fuel flowing through aperture 60 is indicated by the flow lines 62 and the fuel flowing through aperture 58 is indicated schematically by flow lines 64. Optionally several additional horizontal apertures 60 may be provided in the armature at different radial locations thereabout, or alternatively as shown, one aperture 60 may be provided, depending upon the fuel flow pattern sought in each particular instance. It can be seen that the fuel flow from the fuel inlet connector 18 is divided into three paths, a first path expanding across working gap 15. a second path through aperture(s) 60. and a third path through aperture(s) 58. The first path extends between the armature 14 and the magnetic coil 28 and is ultimately joined by the second flow path passing through aperture(s) 60.

It can also be readily appreciated that the diameters of each aperture 58, 60 can be varied to direct the fuel flow in any predetermined desired direction. For example, by reducing the size of apertures 58,60 fuel will be encouraged to flow with increased volume cross the working gap 15. Alternatively, increasing the diameter of apertures 58, 60 will attract greater volume of fuel through those apertures and thereby reduce the fuel flow across the working gap. It has also been found that the diameters of the apertures 58, 60 and the numbers and locations of such apertures affect the damping characteristics of the valve needle 16. both upon opening and upon closing. Accordingly, the diameter of fuel flow apertures 58, 60 and the numbers, locations, and orientations of such apertures will depend upon the desired volumetric flow characteristics and desired flow patterns in each instance; however diameters within the range of 1 - 2 mm have been found to be preferable.

Referring now to Fig. 6. a valve body 34 is also provided with central fuel flow opening 35 and several diagonally oriented fuel path apertures 66 which are intended to receive the CNG fuel flowing from the first and second flow paths from the working gap 15 and aperture(s) 60 along the sides of the armature 14 and to redirect the fuel downwardly toward the valve aperture 41 such that when the needle 16 is lifted, the fuel is permitted to enter aperture 41 and thereafter directed into the intake manifold of the engine, neither of which are shown in the drawings. Fuel flowing along the third flow path through aperture(s) 58 lead directly toward aperture 41. It has been found that the unique provisions of the apertures 58 and 60 - as well as rectangular radial slots 18a on the inlet connector lowermost face - create a fuel flow pattern which induces the CNG to flow in the manner shown by the fuel flow lines at 56, 62 and 64 in Fig. 5 and such fuel flow lines actually create ideal pressure conditions to avoid causing the armature to be attracted to the inlet connector. Thus the attractive forces between the armature and inlet connector are minimized by the several factors mentioned, namely the elimination of the tendency of the oil and contaminates to accumulate in the space 15 located between the armature and the inlet connector, the reduction of the effective inlet connector/armature interface area by provision of radial pads on the face of the inlet connector, and the provision of the unique CNG flow pattern which creates a force free environment between the inlet connector and the armature.

As indicated, alternatively, apertures 60 may be provided in several locations about the circumference of the armature, and apertures 58 may be provided in several locations thereabout. Also their angular orientations may be varied. However, it has been found that a single aperture on each side, as shown is sufficient to produce the desired flow path and the force free environment. Also, as noted, it should be noted that the diameter of each aperture can be altered in order to provide control of the fuel pressures and flow patterns in the areas surrounding the inlet connector, the armature, and the valve body, so as to provide a predetermined fuel flow pattern throughout the injector as may be desired. This feature is more fully disclosed in the aforementioned commonly assigned, commonly filed Attorney Docket No. 99P7610US) copending application entitled Compressed Natural Gas Injector Having Gaseous Damping for Armature Needle Assembly During Opening.

It should also be noted that the presence of the diagonally oriented fuel flow apertures 66 in valve body 34 eliminates the problems of prior art injectors wherein debris and contaminants would accumulate in the area of the upper valve guide 36, causing abrasive action and intermittent guidance between the upper guide 36 and the armature 14. Thus, the provision of the diagonally oriented apertures 66 in valve body 34 encourage the flow of CNG past the area surrounding the upper guide 36 and eliminate any accumulation tendencies for contaminants in the area of upper guide 36.

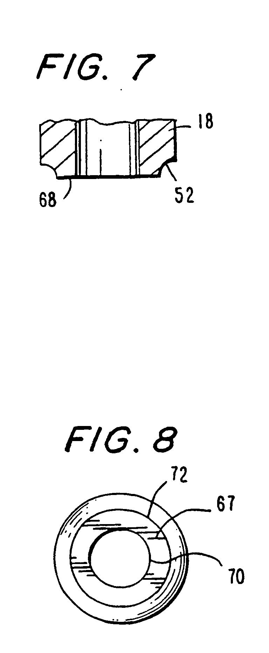

Referring now to Figs. 7 and 8 in conjunction with Figs. 1-3. there is illustrated an alternative embodiment of the lower end portion of the inlet connector 18 and the lowermost face of the inlet connector 18. In this embodiment inlet connector 18 includes arcuately chamfered surface 52 on the lowermost end of inlet connector 18 as in the previous embodiment. In Fig. 8, the lowermost surface of inlet connector 18 defines a surface area 67 between concentric circles 70 and 72 as shown. While the inlet connector/armature contact area is not reduced as in the embodiment of Figs. 3 and 4, the operation of the injector is improved over the prior art injectors. Accordingly, the alternative embodiment as shown in Figs. 7 and 8 will provide substantially improved operation for the injector as shown as compared with prior art injectors when utilized with CNG.

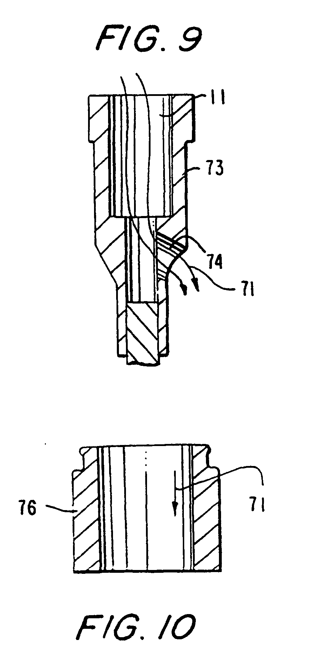

Referring to Figs. 9 and 10 in conjunction with Figs. 1-3, there is shown still another alternative embodiment of the armature configuration for use with CNG the armature in valve assembly configuration for use with CNG. In Fig. 9 the armature assembly 73 contains a diagonally shaped relatively large fuel flow opening 74 at the lower portion thereof, while the horizontal fuel opening 60 in the armature of Fig. 5 has been eliminated. In addition, in the valve body 76 shown in Fig. 10. central flow opening 75 is provided, and the diagonal fuel flow openings 66 of the embodiment of Fig. 6 have been eliminated and the fuel flow as depicted at 71 in Fig. 10 will therefore be directed out of diagonal aperture 74 and into valve assembly 76 as shown in Figs. 9 and 10.

The CNG fuel path created by the combination of the inlet connector and armature shown in Figs. 7-10 represents a significant improvement over prior art structures. However, the armature and valve assembly shown in Figs. 3-6 are preferred. It should be noted that the structures disclosed in Figs. 7-10 produce satisfactory and improved operation and may alternatively be considered to be a preferred embodiment, depending upon the particular environment in which they are utilized. For example, in certain injectors dimensional and clearance considerations may very well create a flow pattern which will mandate a preference to utilizing the embodiments of Figs. 7-10 as opposed to the previously disclosed embodiments of Figs. 3-6.

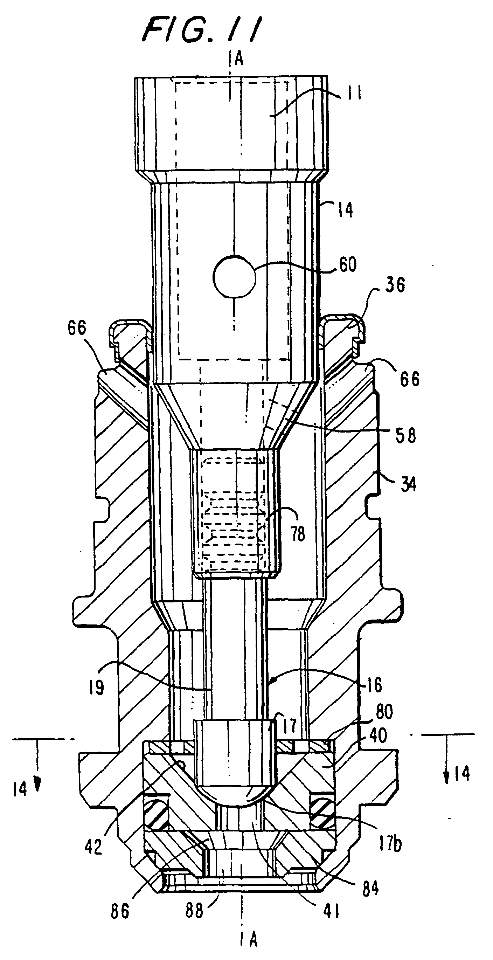

Referring now to Figs. 11 and 12 in conjunction with Figs. 1-3. there is disclosed an enlarged elevational view of the improved armature of the present invention, the improved valve body of the present invention, and the improved valve needle which has been incorporated into the disclosed structure. In particular, the armature 14 contains side fuel flow aperture(s) 60 and the valve body 34 contains the diagonal CNG fuel flow path openings 66. The armature 14 has attached thereto by a known crimping procedure at 78. an improved valve needle 16.

The improved valve components of the present fuel injector are disclosed in Figs. 1. 11 and 12 incorporating the improved needle 16. During operation of the fuel injector, the armature 14 moves upwardly and downwardly due to the energization and deenergization of coil 30 so as to produce alternating opening and closing contact between valve needle 16 and valve seat 40. As the needle is raised to permit the CNG fuel flow through the aperture 41 the flow passes the tip portion 17 of the needle and enters aperture 41 in its flow path toward the intake manifold of the engine.

In conventional liquid fuel injection systems having a conventional elongated needle having a continuous cylindrically shaped outer surface, the needle presents several problems and disadvantages. When applied to CNG systems, the problems inherent with conventional needles are intensified, particularly due to the changes in the gaseous environment as compared to the liquid environment. Accordingly, the present invention incorporates a novel valve needle which improves the operation characteristics of fuel injection systems, including liquid fuel and gaseous fuel types.

It has been known that when conventional valve needles engage a valve seat of a fuel injector the force of impact with conventional needles can generate sounds within the engine compartment which are generally perceived as either a mechanical problem or otherwise harsh or objectional noises emanating from the engine. This force of impact - which is equal to the valve component mass multiplied by the acceleration - is generally caused by the relatively substantial velocity of the needle during its movement toward the "valve closed" position in engagement with the valve seat. Accordingly, the needle 16 which forms part of the present injection system, has been structured to eliminate disadvantages of prior art needles. Although this needle has been found to improve performance with gaseous fuel injection systems as in the present invention, it has also been found to improve the performance of liquid fuel injection systems.

With the improved needle shown in Fig. 11, it has been found that it is desirable to provide a generous radius sealing portion 19 at the valve end of the needle in order to maximize the contact area between the valve needle 16 and the valve seat 40. For example, the greater the radius at the tip of the needle, the better the sealing between the needle and the valve seat 40. Preferably, the radius of the spherical sealing section 19 of needle 16 is in the order of about 1.75 millimeters (i.e.. mm), or about 1.5 times the radius of the corresponding sealing surfaces in the prior art structures. However, needles which are generally known for conventional injectors of the type disclosed herein generally have a continuous outer cylindrical configuration from the upper end to the lower end, thus requiring a needle of relatively large needle cross-sectional area in order to provide a relatively large sealing surface. The needle 16 of the present invention as shown in Fig. 11 is a relatively low mass needle as disclosed, yet includes a relatively large spherical sealing surface.

In particular, the mass of the needle has been substantially reduced by reducing the cross-sectional dimension of the shaft 21 of the needle and retaining a tip portion 17 which is greater in cross-sectional dimension then the shaft of the needle as shown. This configuration effectively reduces the mass of the needle while retaining the relatively large sealing diameter of spherical surface 17b of the tip portion 17 so as to provide a relatively generous radius at the tip - or free end - portion of the needle for engagement with the valve seat 40. It has been found that the relatively reduced mass of the needle and the relatively large radius of the tip portion 17 makes it possible to provide a generous spherical sealing surface 19 for the needle for a given amount of CNG flow. The generous radius also results in a shorter traveling distance for the needle 16 thereby reducing the impact velocity of the needle relative to the valve seat. It has been determined that for a predetermined flow rate, this configuration results in a significant reduction of the noise produced by the impact between the needle 16 and the valve seat 40. Furthermore, the attenuation of the apparent noise is a result of reducing the amplitude (via reduction of lift of the needle 16) and lowering the frequency (via the greater impact radius of tip portion 17) of the noise into a less objectionable region of the sound spectrum as perceived by the human ear.

In addition to reduced noise, the improved needle of the present invention provides a larger guide surface relative to the mean needle diameter, thereby improving the wear resistance of the guiding surface of lower guide 80 shown in Fig. 11. This improved wear resistance of the guide surface is due to the reduced loading compared to that of a conventional base valve guide diameter which was used with needles of the prior art. For example, a typical prior art needle will have a substantially continuous cylindrically shaped shaft which terminates at a radiussed end portion wherein the shaft diameter may be twice as much as the diameter of the shaft of the improved needle shown in Fig. 11. On the other hand, the tip portion 17 of the needle shown in Fig. 11 can be configured to have a diameter up to approximately 50% greater than the diameter of the shaft 19 of needle 16 thereby having a greater diameter than would otherwise be present in a prior art needle and therein making provision for a lower guide 80 having a guide surface which is greater in diameter and surface area than would otherwise be utilized with prior art needles. This ,improves the wear resistance of the guide surface due to the reduced loading as compared to that of the conventional base valve guide diameter. Significant features of the needle disclosed herein are also disclosed in commonly assigned, commonly filed (Attorney Docket No. 98P7678US01) application entitled "Compressed Needle Gas Injector Having Improved Low Noise Valve Needle." the disclosure of which is incorporated herein by reference.

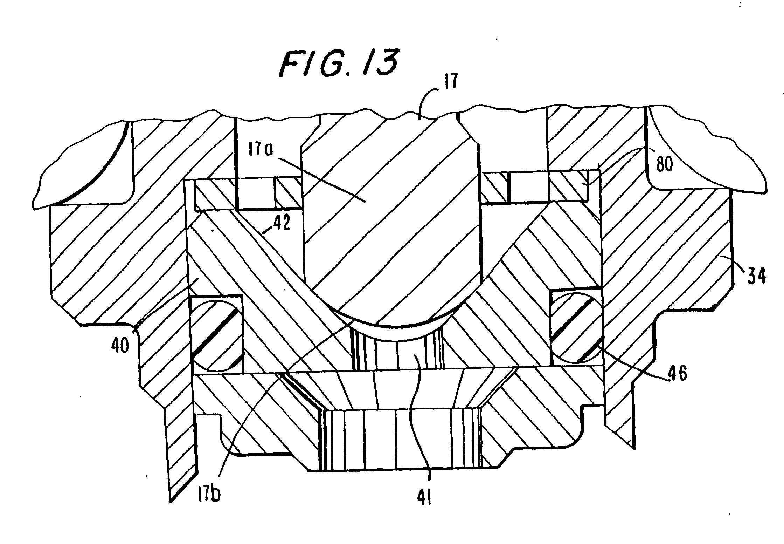

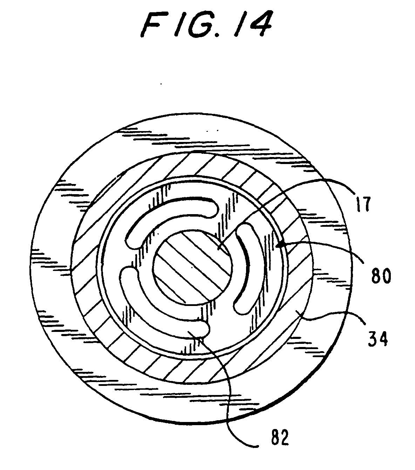

In Fig. 13. the preferred dimensional relationship between the improved needle 16 and the funnel shaped valve needle rest 42 is shown in greater detail. As noted with respect to Fig. 1, needle 16 includes a central shaft portion and a cylindrical needle tip portion 17 having a spherical lower surface 17b which engages the frusto-conically shaped surface 42 of needle rest 40. The needle is guided by upper guide 36 guiding armature 16 as shown in Fig. 1. and lower guide 80 guiding needle tip portion 17 as shown in Figs. 13 and 14. Upper guide 36 is inherently required to provide a space 36a between the guiding surface and the armature 14. to permit the upward and downward motion of the armature and needle. Thus the armature 14 and needle 16 may have the tendency to shift to the left or right at the upper guide 36 within space 36a which is about 10 to about 15mm on the diameter, preferably about 13mm.

Referring now to Fig. 13. it has been found to be advantageous to locate the center of generation 17c of spherical sealing surface 17b of needle tip portion 17 at the center of the lowermost surface of lower guide 80 as shown, in order to assure precise seating and sealing of needle 16 on frusto-conical needle rest 42. In particular, by such positioning of the center 17c of spherical scaling surface 17b of tip portion 17, the lower guide 80 tends to constrain sideward movement of the needle tip portion 17 due to movement of armature 16 within upper guide 36. and effectively becomes a nodal point about which needle tip portion 17 is capable of rotating over 360 degrees of motion. Thus any sideward movement of the needle which occurs at the level of armature 14 and upper guide 36. will cause the needle to pivot about the center point 17c and promote self seating of sealing surface 17b on needle rest 40. This self-seating feature also applies in the event that any misalignment or manufacturing tolerance buildup occurs in the relationship between upper guide 36 and needle 16.

As noted, the present needle 16 is advantageous for use with injectors, which utilize CNG as is contemplated herein, as well as with injectors which utilize liquid fuels, such as gasoline. In particular, in injectors utilizing liquid fuels, the motion of the valve needle is also damped by displacement of fluid across the extended valve seal face and the valve seat which further reduces the impact force and uncontrolled secondary injections upon closure caused by the valve needle when it rebounds away from the valve seat. In such injectors used with liquid fuels, valve rebound produces quantities of low velocity fuel droplets after the needle started to close. Valve rebound dampening minimizes low volume/velocity fuel transfer to the aperture 41. Thus, the dampening of the needle rebound improves the operation of the injector by minimizing low volume/low velocity fuel transfer to the orifice and the surrounding area which tends to extendedly suspend fuel droplets via surface tension when liquid fuels arc used. Valve rebound dampening has also been found to be beneficial in the present injector which is contemplated for use with gaseous CNG.

Referring now to Fig. 14, in conjunction with Fig. 11, lower valve needle guide 80 is illustrated in the form of a dise shaped member having arcuately shaped fuel passage apertures 82 which direct the gaseous CNG in a more efficient and effective manner as compared to prior art valve guides which utilized a plurality of circular openings formed along a circular pattern. The apertures 82 are larger than the prior art circular apertures and are more effective in directing and controlling the fuel flow in an efficient manner by forming the flow pattern into several arcuate flow paths.

Referring now to Fig. 12. the improved armature 14 is illustrated with valve needle 16 crimped thereto at 78 by known crimping procedures: however, valve body 34 has been eliminated for purposes of clarity of illustration in the enlarged view of armature 14 and needle 16. In Fig. 12. the illustration of needle 16 clearly shows the main shaft portion 21 and the enlarged tip portion 17 with enlarged valve spherical sealing surface 17b which conveniently engages and disengages seat area 42 of valve needle rest 40 as described in conjunction with Fig. 13.

Referring again to Fig. 11. the injector 10 incorporates a fuel columnating jet device 84 which includes a shallow funnel shaped section 86 connected to a generally tubular shaped columnating section 88. Gaseous fuel passing through valve aperture 41 is then allowed to pass through funnel shaped section 86. and then to be columnated into a steady gaseous stream in columnating section 88. The fuel columnating device 88 enhances mixture quality, reduces fuel delivery time and enables single or multiple discharge orientation for improved gaseous flow targeting. A narrow gaseous flow discharge angle can entrain the surrounding working fluid (mostly air) and can impart useful turbulent energies to directed air/fuel mixtures flowing through a port, intake valve and/or into a combustion chamber to reduce in-cylinder air/fuel mixture gradients. This feature has proven to significantly reduce engine misfire and to improve exhaust emissions, and is also disclosed in commonly assigned, commonly filed (Attorney Docket No. 99P7611US) application emitted "Gaseous Injector With Columnated Jet Orifice and or Flow Directing Device." the disclosure of which is incorporated herein by reference.

It has been found that the injector of the present invention provides improved operation for the reasons stated hereinabove by improving the flow pattern of the CNG as described, improving the control over the valve needle operation and movements thereof, and improving the sealing characteristics of the needle type valve incorporated as part of the injector. As noted hereinabove, noise characteristics and needle dampening both upon opening and upon closing, have been significantly improved by the present invention and with the result that the injector as shown and described is significantly improved for use with compressed natural gas (CNG) fuels.

Although the present invention is particularly intended for use with CNG fuels, it is self evident that the use of any liquid or gaseous fuels are contemplated, particular those fuels which are relatively high in contamination, since the tolerance of the contaminants has been fully addressed by the disclosed structures.

Although the invention has been described in detail with reference to the illustrated preferred embodiments, variations and modifications may be provided within the scope and spirit of the invention as described and as defined by the following claims.

## Claims

1. An electromagnetically operable fuel injector for a fuel injector system of an internal combustion engine, said injector being generally tubular, having a generally longitudinal axis (A-A) and comprising:
(a) a ferromagnetic core (32);
(b) a magnetic coil (28) surrounding at least part of the ferromagnetic core;
(c) an armature (14) magnetically coupled to said magnetic coil and being moveably responsive to said magnetic coil, said armature actuating a valve closing element (16) which interacts with a fixed valve seat (42) of a fuel valve and being moveable away from said fixed valve seat when said magnetic coil is excited, said armature (14) having a generally elongated shape and a generally central opening (11) for axial reception and passage of gaseous fuel from a fuel inlet connector (18) positioned adjacent thereto, said fuel inlet connector (18) and said armature (14) being adapted to permit a first flow path (56) of gaseous fuel across a working gap (15), transverse to said axis (A-A), between faxing surfaces of said armature (14) and said fuel inlet connector (18) as part of a path leading to said fuel valve; and
(d) at least one first fuel flow aperture (60) extending through a wall portion of said armature (14) to define a second flow path (62) of gaseous fuel as part of a path leading to said fuel valve; said fuel injector being **characterised in that** it is operable for gaseous fuel and by the provision in said working gap (15) of means (18b) defining on said facing surface of said fuel inlet connector (18) a plurality of slots (18a) directed radially of said axis (A-A) and collectively comprising said first flow path (56) for the gaseous fuel.

2. The electromagnetically operable fuel injector according to claim 1, **characterised in that** said armature (14) defines at least one second aperture (58) in a wall portion thereof to define a third flow path (64) of gaseous fuel as part of said path leading to said fuel valve.

3. The electromagnetically operable fuel injector according to Claim 2, **characterised in that** said at least one second aperture (58) is oriented at a generally acute angle with respect to the longitudinal axis (A-A).

4. An electromagnetically operable fuel injector according to any preceding claim, **characterised by** the provision of a valve body (34) positioned downstream of said armature (14) and having in a wall portion thereof at least one aperture (66) positioned to direct fuel toward a valve orifice (41) capable of selective opening and closure by means of a mobile needle valve member (16) attached to said armature (14) and movable thereby.

5. The electromagnetically operable fuel injector according to Claim 4, **characterised in that** said needle valve member (16) is provided with a generally spherically shaped end portion configured and adapted to engage, when the valve is closed, a frusto-conically shaped valve seating (42).

6. An electromagnetically operable fuel injector according to any preceding claim, **characterised in that** the surface of said inlet connector (18) facing said working gap (15) bears a plurality of radially extending raised pads (18b), said pads having recessed portions (18a) therebetween to define said slots through which the gaseous fuel can flow.

7. The electromagnetically operable fuel injector according to Claim 6, **characterised in that** each of said raised pads (18b) has a generally trapezoidal shape.

8. An electromagnetically operable fuel injector according to any preceding claim, **characterised in that** the surface of said inlet connector (18) facing said working gap (15) is formed with a generally chamfered configuration (52) along its radially outer surface.

9. The electromagnetically operable fuel injector according to Claim 8, **characterised in that** said generally chamfered portion (52) of said fuel inlet connector (18) is formed with a generally arcuate cross-section.

10. An electromagnetically operable fuel injector according to any preceding claim **characterised by** the provision of resilient means (30) for biasing said armature (14) away from said inlet connector (18) and along said axis (A-A).

11. The electromagnetically operable fuel injector according to Claim 10, **characterised in that** said resilient means comprises a coil spring (30), extending longitudinally of said axis (A-A), engaged at one of its ends by said fuel inlet connector (18) and at its other end by said armature (14).

12. A method of directing fuel through an electromagnetically operable fuel injector for a fuel system of an internal combustion engine, said injector having a generally longitudinal axis (A-A) and including a fuel inlet connector (18) having an outlet aperture, an armature (14) positioned axially adjacent said outlet aperture and having a generally central elongated opening (11) for reception of fuel from said inlet connector (18) said armature (14) being spaced, along said axis, from said outlet aperture to define a working gap (15) to permit axial movement of said armature (14) towards and away from said outlet aperture to selectively open and close a fuel valve (16, 40-42) to selectively deliver fuel therethrough, comprising the steps of:
a) directing the fuel to pass axially though said fuel inlet connector (18);
b) directing some of said fuel to pass from said outlet aperture of said fuel inlet connector (18) into said generally elongated central opening (11) of said armature (14) in an axial direction towards said fuel valve;
c) diverting at least a portion of the flow of fuel directed into said armature (14) to flow in a direction away from said axial direction; and
**characterised in that** said fuel is gaseous fuel and by:
d) directing at least a portion of the fuel flow from said outlet aperture of said fuel inlet connector (18) to flow generally transversely of said axis across said working gap (15) and through a plurality of radial slots (18a) defined in a surface of said fuel inlet connector (18) facing said armature (14).

13. The method according to Claim 12, **characterised in that** the step of directing the gaseous fuel passing through said armature (14) to flow in a direction away from the axial direction is accomplished by directing the gaseous fuel through at least one first aperture (60) provided in a wall portion of said armature (14).

14. The method according to Claim 13, **characterised in that** the at least one first aperture (60) in said wall portion of said armature (14) extends generally transverse to said axial direction (A-A).

15. A method according to Claim 13 or Claim 14, **characterised in that** at least a portion of the gaseous fuel flowing in said armature (14) is permitted to pass through at least one second aperture (58) in a wall portion thereof downstream of the wall portion in which said at least one first aperture (60) is provided; said at least one second aperture extending at an acute angle to said longitudinal axis (A-A), whereby at least three fuel flow paths are provided.

16. A method according to Claim 15, **characterised in that** said at least one first (60) and second (58) apertures in said armature (14) are from about 1.0mm to about 2.0mm in diameter.

17. A method according to Claim 15 or Claim 16 **characterised in that** predetermined numbers of each of said first (60) and second (58) apertures are provided and the diameters thereof are predetermined to establish a predetermined number of fuel flow paths and volumetric flow rates thereof.

18. A method according to any of claims 12 to 17, **characterised in that** said injector comprises a magnetic coil system having a magnetic coil (28), and said armature (14) is magnetically coupled to said magnetic coil system to cause said armature to move toward and away from the outlet aperture of said fuel inlet connector.

19. A method according to any of claims 12 - 18, **characterised in that** the outlet aperture of said inlet fuel connection (18) is defined in a surface bearing a plurality of raised pads (18b) thereon, said raised pads being respectively spaced and defining between them said radial slots (18a) to permit the flow of gaseous fuel through said working gap (15) when said armature (14) moves toward said outlet aperture to thereby open said fuel valve (16, 40 - 42).

## Patentansprüche

1. Elektromagnetisch betätigtes Einspritzventil für ein Einspritzsystem einer Kraftmaschine mit innerer Verbrennung, wobei das besagte Einspritzventil allgemein tubusförmig ist, eine allgemeine Längsachse (A-A) aufweist und Folgendes umfasst:
(a) einen ferromagnetischen Kern (32);
(b) eine Magnetspule (28), die zumindest einen Teil des ferromagnetischen Kerns umgibt;
(c) einen Anker (14), der magnetisch an besagte Magnetspule gekoppelt ist und durch Bewegung auf besagte Magnetspule reagiert, wobei der besagte Anker ein Element (16) zum Schließen des Ventils betätigt, das mit einem feststehenden Ventilsitz (42) eines Brennstoffventillochs (41) interagiert und vom besagten feststehenden Ventilsitz weg bewegt werden kann, wenn die besagte Magnetspule erregt wird, wobei besagter Anker (14) eine allgemein lang gestreckte Form und eine allgemein mittige Öffnung (11) zur axialen Aufnahme und Durchleitung von gasförmigem Brennstoff von einem Brennstoffeinlassanschlusstubus (18) aufweist, der über dem Anker angeordnet ist, wobei besagter Brennstoffeinlassanschlusstubus (18) und besagter Anker (14) so beschaffen sind, dass sie einen ersten Strömungspfad (56) für gasförmigen Brennstoff ermöglichen durch einen in Querrichtung zur besagten Achse (A-A) verlaufenden Arbeitsspalt (15) zwischen den einander gegenüberliegenden Flächen des besagten Ankers (14) und des besagten Brennstoffeinlassanschlusstubus (18) als Teil eines Pfads, der zu besagtem Brennstoffventilloch führt; und
(d) mindestens eine erste Brennstoffdurchflussöffnung (60), die durch einen Wandabschnitt des besagten Ankers (14) verläuft, um einen zweiten Strömungspfad (62) für gasförmigen Brennstoff als Teil eines Pfads zu definieren, der zu besagtem Brennstoffventilloch führt;
wobei besagtes Einspritzventil **dadurch gekennzeichnet ist, dass** es mit gasförmigem Brennstoff betrieben werden kann und durch die Bereitstellung von Mitteln (18b) im besagten Arbeitsspalt (15) auf der besagten gegenüberliegenden Fläche des besagten Brennstoffeinlassanschlusstubus (18) eine Vielzahl von Schlitzen (18a) definiert ist, die radial zur besagten Achse (A-A) ausgerichtet sind und gemeinsam den besagten ersten Strömungspfad (56) für den gasförmigen Brennstoff umfassen.

2. Elektromagnetisch betätigtes Einspritzventil nach Anspruch 1, **dadurch gekennzeichnet, dass** besagter Anker (14) mindestens eine zweite Öffnung (58) in einem seiner Wandabschnitte definiert, um einen dritten Strömungspfad (64) für gasförmigen Brennstoff zu definieren als Teil des besagten Pfads, der zu besagtem Einspritzventil führt.

3. Elektromagnetisch betätigtes Einspritzventil nach Anspruch 2, **dadurch gekennzeichnet, dass** besagte mindestens eine zweite Öffnung (58) in einem allgemein spitzen Winkel im Verhältnis zu besagter Längsachse (A-A) ausgerichtet ist.

4. Elektromagnetisch betätigtes Einspritzventil nach einem der vorhergehenden Ansprüche, **dadurch gekennzeichnet, dass** ein Ventilkörper (34) bereitgestellt wird, der in Strömungsrichtung hinter dem besagten Anker (14) angeordnet ist, und er in einem seiner Wandabschnitte mindestens eine Öffnung (66) aufweist, die so angeordnet ist, dass sie Brennstoff zu einem Ventilloch (41) leitet, das in der Lage ist, selektiv zu öffnen und zu schließen mittels eines beweglichen Nadelventilelements (16), das an besagtem Anker (14) befestigt ist und von diesem bewegt werden kann.

5. Elektromagnetisch betätigtes Einspritzventil nach Anspruch 4, **dadurch gekennzeichnet, dass** das besagte Nadelventilelement (16) mit einem allgemein kugelförmig ausgebildeten Endbereich ausgestattet ist, der so konstruiert und beschaffen ist, dass er, wenn das Ventil geschlossen ist, auf einem kegelstumpfförmig ausgebildeten Ventilsitz (42) aufsetzt.

6. Elektromagnetisch betätigtes Einspritzventil nach einem der vorhergehenden Ansprüche, **dadurch gekennzeichnet, dass** die Fläche des besagten Brennstoffeinlassanschlusstubus (18), die dem besagten Arbeitsspalt (15) gegenüberliegt, eine Vielzahl von radial verlaufenden erhabenen Konturen (18b) trägt, wobei besagte Konturen vertiefte Abschnitte (18a) dazwischen aufweisen, um die besagten Schlitze zu definieren, durch die der gasförmige Brennstoff strömen kann.

7. Elektromagnetisch betätigtes Einspritzventil nach Anspruch 6, **dadurch gekennzeichnet, dass** jede der erhabenen Konturen (18b) eine allgemein trapezförmige Form hat.

8. Elektromagnetisch betätigtes Einspritzventil nach einem der vorhergehenden Ansprüche, **dadurch gekennzeichnet, dass** die Fläche des besagten Brennstoffeinlassanschlusstubus (18), die besagtem Arbeitsspalt (15) gegenüberliegt, mit einer allgemein angefasten Kontur (52) entlang ihrer radial verlaufenden Außenfläche ausgebildet ist.

9. Elektromagnetisch betätigtes Einspritzventil nach Anspruch 8, **dadurch gekennzeichnet, dass** besagter allgemein angefaster Bereich (52) des besagten Brennstoffeinlassanschlusstubus (18) allgemein mit einem bogenförmigen Querschnitt ausgebildet ist.

10. Elektromagnetisch betätigtes Einspritzventil nach einem der vorhergehenden Ansprüche, **dadurch gekennzeichnet, dass** ein elastisches Mittel (30) bereitgestellt wird, um besagten Anker (14) vom besagten Brennstoffeinlassanschlusstubus (18) weg gerichtet und entlang der besagten Achse (A-A) vorzuspannen.

11. Elektromagnetisch betätigtes Einspritzventil nach Anspruch 10, **dadurch gekennzeichnet, dass** das besagte elastische Mittel eine Schraubenfeder (30) umfasst, die längs zur besagten Achse (A-A) verläuft und an einem ihrer Enden durch besagten Brennstoffeinlassanschlusstubus (18) und an ihrem anderen Ende durch besagten Anker (14) gehalten wird.

12. Verfahren zur Führung von Brennstoff durch ein elektromagnetisch betätigtes Einspritzventil für ein Brennstoffsystem einer Kraftmaschine mit innerer Verbrennung, wobei besagtes Einspritzventil eine allgemeine Längsachse (A-A) aufweist und einen Brennstoffeinlassanschlusstubus (18) umfasst, der eine Austrittsöffnung aufweist, wobei ein Anker (14) axial unter der besagten Austrittsöffnung angeordnet ist und eine allgemein lang gestreckte Öffnung (11) zur Aufnahme von Brennstoff vom besagten Brennstoffeinlassanschlusstubus (18) aufweist, wobei der besagte Anker (14) entlang der besagten Achse in einem Abstand zur besagten Austrittsöffnung angeordnet ist, um einen Arbeitsspalt (15) zu definieren, um eine axiale Bewegung des besagten Ankers (14) hin zu und weg von der besagten Austrittsöffnung zu ermöglichen, um ein Brennstoffventilloch (16, 40-42) selektiv zu öffnen und zu schließen, um selektiv Brennstoff durch es hindurch zu fördern, wobei das Verfahren folgende Schritte umfasst:
a) Leiten des Brennstoffs, so dass er axial durch den besagten Brennstoffeinlassanschlusstubus (18) strömt;
b) Leiten eines Teils des besagten Brennstoffs, so dass er von besagter Austrittsöffnung des besagten Brennstoffeinlassanschlusstubus (18) in die besagte allgemein lang gestreckte mittige Öffnung (11) des besagten Ankers (14) in einer axialen Richtung zum besagten Brennstoffventilloch geführt wird;
c) Ablenken von zumindest einem Teil des Brennstoffstroms, der in besagten Anker (14) geleitet wird, so dass er in eine von der besagten axialen Richtung weg weisende Richtung strömt; und **dadurch gekennzeichnet, dass** es sich bei dem besagten Brennstoff um gasförmigen Brennstoff handelt und dass:
d) zumindest ein Teil des Brennstoffstroms von besagter Austrittsöffnung des besagten Brennstoffeinlassanschlusstubus (18) allgemein in Querrichtung zur besagten Achse durch den besagten Arbeitsspalt (15) strömt und durch eine Vielzahl von radialen Schlitzen (18a), die auf einer Fläche des besagten Brennstoffeinlassanschlusstubus (18) definiert sind, die dem besagten Anker (14) gegenüberliegt.

13. Verfahren nach Anspruch 12, **dadurch gekennzeichnet, dass** der Schritt, bei dem der gasförmige Brennstoff, der durch den besagten Anker (14) strömt, in eine von der axialen Richtung weg weisende Richtung geleitet wird, **dadurch** durchgeführt wird, dass der gasförmige Brennstoff durch mindestens eine erste Öffnung (60) geleitet wird, die in einem Wandabschnitt des besagten Ankers (14) bereitgestellt wird.

14. Verfahren nach Anspruch 13, **dadurch gekennzeichnet, dass** die mindestens eine erste Öffnung (60) im besagten Wandabschnitt des besagten Ankers (14) allgemein in Querrichtung zur besagten axialen Richtung (A-A) verläuft.

15. Verfahren nach Anspruch 13 oder Anspruch 14, **dadurch gekennzeichnet, dass** es zumindest für einen Teil des gasförmigen Brennstoffs, der in besagten Anker (14) fließt, möglich ist, durch mindestens eine zweite Öffnung (58) in einem Wandabschnitt des Ankers zu strömen, die in Strömungsrichtung hinter dem Wandabschnitt angeordnet ist, in dem die mindestens eine erste Öffnung (60) bereitgestellt wird; wobei besagte mindestens eine zweite Öffnung in einem spitzen Winkel zur besagten Längsachse (A-A) verläuft, wodurch mindestens drei Brennstoffströmungspfade bereitgestellt werden.

16. Verfahren nach Anspruch 15, **dadurch gekennzeichnet, dass** besagte mindestens eine erste (60) und zweite (58) Öffnung(en) in besagtem Anker (14) einen Durchmesser von etwa 1,0 mm bis 2,0 mm haben.

17. Verfahren nach Anspruch 15 oder Anspruch 16, **dadurch gekennzeichnet, dass** jeweils eine vorgegebene Anzahl für die besagte(n) erste(n) (60) und zweite(n) (58) Öffnung(en) vorgesehen wird, und deren Durchmesser vorgegeben sind, um eine vorgegebene Anzahl von Brennstoffströmungspfaden und Volumenströmen darin bereitzustellen.

18. Verfahren nach einem der Ansprüche 12 bis 17, **dadurch gekennzeichnet, dass** besagtes Einspritzventil ein Magnetspulensystem umfasst, das eine Magnetspule (28) aufweist, und besagter Anker (14) magnetisch an das Magnetspulensystem gekoppelt ist, um den besagten Anker zu veranlassen, sich zur Austrittsöffnung des besagten Brennstoffeinlassanschlusstubus hin und von ihr weg zu bewegen.

19. Verfahren nach einem der Ansprüche 12 bis 18, **dadurch gekennzeichnet, dass** die Austrittsöffnung des besagten Brennstoffeinlassanschlusstubus (18) auf einer Fläche definiert ist, die eine Vielzahl von erhabenen Konturen (18b) darauf aufweist, wobei besagte erhabene Konturen jeweils in einem Abstand zueinander angeordnet sind und zwischen einander die besagten radialen Schlitze (18a) definieren, um zu ermöglichen, dass gasförmiger Brennstoff durch den besagten Arbeitsspalt (15) strömt, wenn der besagte Anker (14) sich zur besagten Austrittsöffnung bewegt, um **dadurch** das besagte Brennstoffventilloch (16, 40-42) zu öffnen.

## Revendications

1. Injecteur de carburant à commande électromagnétique pour un système d'injecteur de carburant de moteur à combustion interne, ledit injecteur étant globalement tubulaire, ayant un axe globalement longitudinal (A-A) et comprenant :
(a) un noyau ferromagnétique (32) ;
(b) une bobine magnétique (28) entourant au moins une partie du noyau ferromagnétique ;
(c) un induit (14) couplé magnétiquement à ladite bobine magnétique et réagissant à mouvement à ladite bobine magnétique, ledit induit actionnant un élément de fermeture de soupape (16) qui interagit avec un siège de soupape fixe (42) d'une soupape de carburant et étant déplaçable de façon à le décoller dudit siège de soupape fixe lorsque ladite bobine magnétique est excitée, ledit induit (14) ayant une forme globalement allongée et une ouverture globalement centrale (11) pour la réception et le passage axiaux de carburant gazeux provenant d'un raccord d'arrivée de carburant (18) positionné de manière y adjacente, ledit raccord d'arrivée de carburant (18) et ledit induit (14) étant adaptés pour ménager une première voie d'écoulement (56) de carburant gazeux en travers d'un entrefer de service (15), transversal audit axe (A-A), entre des surfaces opposées dudit induit (14) et dudit raccord d'arrivée de carburant (18) en tant que partie d'une voie menant à ladite soupape de carburant, et
(d) au moins une première ouverture d'écoulement de carburant (60) s'étendant à travers une partie formant paroi dudit induit (14) pour définir une seconde voie d'écoulement (62) de carburant gazeux en tant que partie d'une voie menant à ladite soupape de carburant,
ledit injecteur de carburant étant **caractérisé en ce qu'**il est utilisable avec du carburant gazeux et **en ce que** l'on ménage dans ledit entrefer de service (15) un moyen (18b) définissant sur ladite surface opposée dudit raccord d'arrivée de carburant (18) une pluralité de rainures (18a) orientées radialement par rapport audit axe (A-A) et composant collectivement ladite première voie d'écoulement (56) du carburant gazeux.

2. Injecteur de carburant à commande électromagnétique selon la revendication 1, **caractérisé en ce que** ledit induit (14) définit au moins une seconde ouverture (58) dans une partie formant paroi de celui-ci pour définir une troisième voie d'écoulement (64) de carburant gazeux en tant que partie de ladite voie menant à ladite soupape de carburant.

3. Injecteur de carburant à commande électromagnétique selon la revendication 2, **caractérisé en ce que** ladite au moins une seconde ouverture (58) est orientée suivant un angle globalement aigu par rapport à l'axe longitudinal (A-A).

4. Injecteur de carburant à commande électromagnétique selon l'une quelconque des revendications précédentes, **caractérisé en ce que** l'on aménage un corps de soupape (34) positionné en aval dudit induit (14) et comportant dans une partie formant paroi de celui-ci au moins une ouverture (66) positionnée pour diriger le carburant vers un orifice de soupape (41) capable de s'ouvrir et de se fermer sélectivement au moyen d'un organe formant soupape à aiguille mobile (16) attaché audit induit (14) et déplaçable par celui-ci.

5. Injecteur de carburant à commande électromagnétique selon la revendication 4, **caractérisé en ce que** ledit organe formant soupape à aiguille (16) est pourvu d'une partie formant extrémité de forme globalement sphérique configurée et adaptée pour s'engager, lorsque la soupape est fermée, dans un siège de soupape de forme tronconique (42).

6. Injecteur de carburant à commande électromagnétique selon l'une quelconque des revendications précédentes, **caractérisé en ce que** la surface dudit raccord d'arrivée (18) faisant face audit entrefer de service (15) porte une pluralité de plages en relief d'extension radiale (18b), lesdites plages comportant des parties en creux (18a) entre elles pour définir lesdites rainures par lesquelles le carburant gazeux peut s'écouler.

7. Injecteur de carburant à commande électromagnétique selon la revendication 6, **caractérisé en ce que** chacune desdites plages en relief (18b) a une forme globalement trapézoïdale.

8. Injecteur de carburant à commande électromagnétique selon l'une quelconque des revendications précédentes, **caractérisé en ce que** la surface dudit raccord d'arrivée (18) faisant face audit entrefer de service (15) est formée selon une configuration globalement chanfreinée (52) sur sa surface radialement externe.

9. Injecteur de carburant à commande électromagnétique selon la revendication 8, **caractérisé en ce que** ladite partie globalement chanfreinée (52) dudit raccord d'arrivée de carburant (18) est formée suivant une section droite globalement arquée.

10. Injecteur de carburant à commande électromagnétique selon l'une quelconque des revendications précédentes, **caractérisé en ce que** l'on prévoit un moyen résilient (30) pour solliciter ledit induit (14) de façon à le décoller dudit raccord d'arrivée (18) et suivant ledit axe (A-A).

11. Injecteur de carburant à commande électromagnétique selon la revendication 10, **caractérisé en ce que** ledit moyen résilient est constitué par un ressort hélicoïdal (30), s'étendant longitudinalement audit axe (A-A), accroché par l'une de ses extrémités audit raccord d'arrivée de carburant (18) et par son autre extrémité audit induit (14).

12. Procédé pour diriger du carburant gazeux dans un injecteur de carburant à commande électromagnétique pour un système d'alimentation de moteur à combustion interne, ledit injecteur ayant un,axe globalement longitudinal (A-A) et comprenant un raccord d'arrivée de carburant (18) comportant une ouverture de sortie, un induit (14) positionné axialement de manière adjacente à ladite ouverture de sortie et comportant une ouverture allongée globalement centrale (11) pour recevoir du carburant dudit raccord d'arrivée (18), ledit induit (14) étant espacé, suivant ledit axe, par rapport à ladite ouverture de sortie pour définir un entrefer de service (15) pour permettre un mouvement axial de va-et-vient dudit induit (14) par rapport à ladite ouverture de sortie pour ouvrir et fermer sélectivement une soupape de carburant (16, 40-42) pour fournir sélectivement du carburant par celle-ci, comprenant les étapes consistant à :
a) diriger le carburant pour qu'il passe axialement dans ledit raccord d'arrivée de carburant (18) ;
b) diriger une partie dudit carburant pour qu'il passe de ladite ouverture de sortie dudit raccord d'arrivée de carburant (18) dans ladite ouverture centrale globalement allongée (11) dudit induit (14) dans une direction axiale vers ladite soupape de carburant ;
c) dériver au moins une partie de l'écoulement de carburant dirigé dans ledit induit (14) pour qu'elle s'écoule dans une direction l'écartant de ladite direction axiale, et
**caractérisé en ce que** ledit carburant est du carburant gazeux et **en ce que** :
d) l'on dirige au moins une partie de l'écoulement de carburant provenant de ladite ouverture de sortie dudit raccord d'arrivée de carburant (18) pour qu'il s'écoule globalement transversalement audit axe en travers dudit entrefer de service (15) et par une pluralité de rainures radiales (18a) définies sur une surface dudit raccord d'arrivée de carburant (18) faisant face audit induit (14).

13. Procédé selon la revendication 12, **caractérisé en ce que** l'étape consistant à diriger le carburant gazeux passant dans ledit induit (14) pour qu'il s'écoule dans une direction l'écartant de la direction axiale est réalisée en dirigeant le carburant gazeux dans au moins une première ouverture (60) ménagée dans une partie formant paroi dudit induit (14).

14. Procédé selon la revendication 13, **caractérisé en ce que** la au moins une première ouverture (60) dans ladite partie formant paroi dudit induit (14) s'étend globalement transversalement à ladite direction axiale (A-A).

15. Procédé selon la revendication 13 ou la revendication 14, **caractérisé en ce que** l'on permet à au moins une partie du carburant gazeux s'écoulant dans ledit induit (14) de passer par au moins une seconde ouverture (58) dans une partie formant paroi de celui-ci en aval de la partie formant paroi dans laquelle ladite au moins une première ouverture (60) est ménagée, ladite au moins une seconde ouverture s'étendant suivant un angle aigu par rapport audit axe longitudinal (A-A), ce par quoi au moins trois voies d'écoulement de carburant sont ménagées.

16. Procédé selon la revendication 15, **caractérisé en ce que** lesdites au moins une première (60) et une seconde (58) ouvertures dans ledit induit (14) font environ 1,0 mm à environ 2,0 mm de diamètre.

17. Procédé selon la revendication 15 ou la revendication 16 **caractérisé en ce que** l'on ménage des nombres prédéterminés de chacune desdites première (60) et seconde (58) ouvertures et **en ce que** les diamètres de celles-ci sont prédéterminés pour établir un nombre prédéterminé de voies d'écoulement de carburant et les débits volumétriques de celles-ci.

18. Procédé selon l'une quelconque des revendications 12 à 17, **caractérisé en ce que** ledit injecteur comprend un système de bobine magnétique comportant une bobine magnétique (28) et **en ce que** ledit induit (14) est couplé magnétiquement audit système de bobine magnétique pour amener ledit induit à accomplir un mouvement de va-et-vient par rapport à l'ouverture de sortie dudit raccord d'arrivée de carburant.

19. Procédé selon l'une quelconque des revendications 12-18, **caractérisé en ce que** l'ouverture de sortie dudit raccord d'arrivée de carburant (18) est définie dans une surface portant sur elle une pluralité de plages en relief (18b), lesdites plages en relief étant espacées les unes par rapport aux autres et définissant entre elles lesdites rainures radiales (18a) pour permettre l'écoulement de carburant gazeux dans ledit entrefer de service (15) lorsque ledit induit (14) se déplace vers ladite ouverture de sortie pour ainsi ouvrir ladite soupape de carburant (16, 40-42).
